# FASCICULE DE BREVET EUROPEEN

(11) **EP 0 781 830 B1**
(45) Date de publication et mention de la délivrance du brevet: **27.03.2002**
(21) Numéro de dépôt: 96402911.0
(22) Date de dépôt: 27.12.1996
(51) Int. Cl.: C10G 45/44

(54) **Procédé de réduction sélective de la teneur en benzène et en composés insaturés légers d'une coupe d'hydrocarbures**
Verfahren zur Erniedrigung des Gehaltes von Benzol und von leichten ungesättigten Verbindungen in Kohlenwasserstofffraktionen
Process for lowering the content of benzene and of light unsaturated compounds in hydrocarbon fractions

(30) Priorité: 27.12.1995 FR 9515531
(43) Date de publication de la demande: 02.07.1997
(73) Titulaire: INSTITUT FRANCAIS DU PETROLE, 92502 Rueil-Malmaison (FR)
(72) Inventeur: Travers, Christine, 92500 Rueil Malmaison (FR); Cosyns, Jean, 78580 Maule (FR); Cameron, Charles, 75005 Paris (FR); Nocca, Jean-Luc, 92500 Rueil Malmaison (FR); Montecot, Francoise, 78340 Les Clayes Sous Bois (FR)

(56) Documents cités:
- EP-A- 0 552 069
- EP-A- 0 552 070
- US-A- 4 503 265
- US-A- 5 177 283

## Description

L'invention concerne un procédé de réduction sélective de la teneur en composés insaturés légers (c'est-à-dire contenant au plus six atomes de carbone par molécule) dont benzène, d'une coupe d'hydrocarbures comportant essentiellement au moins 5 atomes de carbone par molécule, sans perte sensible de l'indice d'octane, ledit procédé comprenant le passage de ladite coupe dans une zone de distillation associée à une zone réactionnelle d'hydrogénation, ledit procédé étant caractérisé en ce que la zone d'hydrogénation est au moins en partie externe à la zone de distillation.

Compte tenu de la nocivité reconnue du benzène et des oléfines, composés insaturés, la tendance générale est de réduire la teneur de ces constituants dans les essences.

Le benzène a des propriétés cancérigènes et il est par conséquent exigé de limiter au maximum toute possibilité de polluer l'air ambiant, notamment en l'excluant pratiquement des carburants automobiles. Aux Etats-Unis les carburants reformulés ne doivent pas contenir plus de 1% de benzène; en Europe, même si les spécifications ne sont pas encore aussi sévères, il est préconisé de tendre progressivement vers cette valeur.

Les oléfines ont été reconnues comme étant parmi les hydrocarbures les plus réactifs dans le cycle de réactions photochimiques avec les oxydes d'azote, qui se produit dans l'atmosphère et qui conduit à la formation d'ozone. Une élévation de la concentration d'ozone dans l'air peut être source de troubles respiratoires. La diminution de la teneur en oléfines des essences, et plus particulièrement des oléfines les plus légères qui ont le plus tendance à se volatiliser lors des manipulations du carburant, est par conséquent souhaitable.

La teneur en benzène d'une essence est très largement dépendante de celle de la composante réformat de cette essence. Le réformat résulte d'un traitement catalytique de naphta destiné à produire des hydrocarbures aromatiques, comprenant principalement de 6 à 9 atomes de carbone dans leur molécule et dont l'indice d'octane très élevé confère à l'essence ses propriétés antidétonantes.

Pour les raisons de nocivité décrites ci-dessus, il est donc nécessaire de réduire au maximum la teneur en benzène du réformat. Plusieurs voies sont envisageables.

Une première voie consiste à limiter, dans le naphta constituant la charge d'une unité de reformage catalytique, la teneur en précurseurs du benzène, tels que le cyclohexane et le méthylcyclopentane. Cette solution permet effectivement de réduire sensiblement la teneur en benzène de l'effluent de l'unité de réformage mais ne peut suffire à elle seule lorsqu'il s'agit de descendre à des teneurs aussi basses que 1 %. Une seconde voie consiste à éliminer, par distillation, une fraction légère du réformat contenant le benzène. Cette solution conduit à une perte de l'ordre de 15 à 20% d'hydrocarbures qui seraient valorisables dans les essences. Une troisième voie consiste à extraire le benzène présent dans l'effluent de l'unité de réformage. Plusieurs techniques connues sont en principe applicables : extraction par solvant, distillation extractive, adsorption. Aucune de ces techniques n'est appliquée industriellement, car aucune ne permet d'extraire sélectivement le benzène d'une manière économique. Une quatrième voie consiste à transformer chimiquement le benzène pour le convertir en un constituant non visé par les limitations légales. L'alkylation par l'éthylène par exemple transforme le benzène principalement en éthylbenzène. Cette opération est cependant onéreuse du fait de l'intervention de réactions secondaires qui nécessitent des séparations coûteuses en énergie.

Le benzène d'un réformat peut également être hydrogéné en cyclohexane. Comme il est impossible d'hydrogéner sélectivement le benzène d'un mélange d'hydrocarbures contenant également du toluène et des xylènes, il est donc nécessaire de fractionner préalablement ce mélange de manière à isoler une coupe ne contenant que le benzène, qui peut alors être hydrogéné.

Il a également été décrit un procédé dans lequel la zone catalytique d'hydrogénation du benzène est interne à la zone de rectification de la colonne de distillation qui sépare le benzène des autres aromatiques (Benzene Reduction - Kerry Rock and Gary Gildert CDTECH - 1994 Conference on Clean Air Act Implementation and Reformulated Gasoline - Oct. 94 ), ce qui permet de réaliser une économie d'appareillage. Il est apparu que la perte de charge au travers du ou des lit(s) catalytique(s) selon ledit procédé ne permet pas l'obtention d'un mélange intime entre la phase liquide et le flux gazeux contenant de l'hydrogène. En effet, selon ce type de technologie où la réaction et la distillation procèdent simultanément dans le même espace physique, la phase liquide descend à travers tout lit catalytique de la zone réactionnelle en écoulement ruisselant, donc en filets de liquide. La fraction gazeuse contenant la fraction de charge vaporisée et le flux gazeux contenant de l'hydrogène monte au travers dudit lit catalytique dans des colonnes de gaz. Par cette disposition, l'entropie du système est forte et la perte de charge à travers le (ou les) lit(s) catalytique(s) est faible. Par suite la façon d'opérer selon ce type de technologie ne permet pas facilement de promouvoir la dissolution de l'hydrogène dans la phase liquide comprenant le ou les composé(s) insaturé(s).

Le brevet US-A-4.503.265 décrit un procédé de production de MTBE comportant le soutirage d'une colonne de distillation d'une coupe contenant de l'isobutène et du méthanol, le passage de cette coupe dans un réacteur contenant un catalyseur acide échangeur cationique, la réaction de l'isobutène et du méthanol pour générer le MTBE et la réinjection de l'effluent de la réaction dans la colonne. Le produit lourd, le MTBE, est séparé en fond de colonne et le raffinat appauvri en isobutène est séparé en tête de colonne. Ledit brevet concerne donc le déplacement d'une réaction équilibrée par séparation du produit, le MTBE, et des réactifs, le méthanol et l'isobutène.

Les demandes de brevets WO 93/19031 et WO 93/19032 décrivent des procédés de production de MTBE comportant des moyens semblables à ceux qui sont décrit dans le brevet US-A-4.503.265.

Le brevet US-A-5.177.283 décrit un procédé de conversion d'hydrocarbures, qui comprend le passage de la charge dans une zone de fractionnement, l'effluent de tête étant riche d'un des réactifs et l'effluent de fond étant riche du produit de la réaction, le soutirage latéral d'un flux liquide, qui est passé avec un flux gazeux riche en hydrogène dans une zone de réaction catalytique qui permet d'obtenir un effluent comprenant un des réactifs et le produit de la réaction, une fraction de la partie gazeuse dudit effluent étant recyclée en zone de réaction, la partie liquide dudit effluent étant renvoyée en zone de fractionnement, généralement à proximité du soutirage. Il n'est pas fait mention de la réaction d'hydrogénation du benzène et de tout autre composé insaturé comprenant au plus six atomes de carbone par molécule, qui est une réaction totale par rapport à toutes les réactions mentionnées dans ledit brevet qui sont des réactions équilibrées. Il n'est pas non plus fait mention des réactions produisant un (ou plusieurs) produit(s) de réaction ayant des points d'ébullition inférieurs et/ou presque identiques aux points d'ébullition des réactifs. Dans ce cas, généralement, les produits de la (ou des) réaction(s) peuvent être au moins en partie dans la fraction sortant de la tête de colonne.

Le procédé selon l'invention permet de produire au moindre coût, à partir d'un réformat brut, un réformat appauvri en benzène ou, si nécessaire, quasi totalement épuré de benzène ainsi que d'autres hydrocarbures insaturés contenant au plus six atomes de carbone par molécule tels que les oléfines légères, sans perte significative de rendement, et avec très peu de perte ou avec un gain d'indice d'octane. Le procédé selon l'invention est caractérisé par l'intégration des deux opérations de distillation et d'hydrogénation agencées et opérées de manière à minimiser le coût d'investissement du procédé et à maximiser la conversion d'hydrogène tout en maximisant le rendement en distillat et en résidu issus de la colonne, avec une teneur en benzène adéquate. Ainsi le procédé selon l'invention réalise au moins partiellement l'hydrogénation sélective du benzène et de tout composé insaturé comprenant au plus six atomes de carbone par molécule et différent du benzène, éventuellement présent dans la charge tout en limitant l'hydrogenation des composés C₇⁺ (c'est-à-dire ayant au moins sept atomes de carbone par molécule).

Le procédé selon l'invention est un procédé de traitement d'une charge, constituée en majeure partie par des hydrocarbures comportant au moins 5, de préférence entre 5 et 9 atomes de carbone par molécule, et comprenant au moins un composé insaturé comportant au plus six atomes de carbone par molécule dont du benzène, et éventuellement et de préférence au moins une oléfine, tel que l'on traite ladite charge dans une zone de distillation, comportant une zone d'épuisement et une zone de rectification, associée à une zone réactionnelle d'hydrogénation, comprenant au moins un lit catalytique, dans laquelle on réalise l'hydrogénation d'au moins une partie des composés insaturés comprenant au plus six atomes de carbone par molécule, c'est-à-dire comprenant jusqu'à six (inclus) atomes de carbone par molécule, et contenus dans la charge, en présence d'un catalyseur d'hydrogénation et d'un flux gazeux comprenant, de préférence en majeure partie, de l'hydrogène, la charge de la zone réactionnelle étant prélevée à la hauteur d'un niveau de prélèvement et représentant au moins une partie, de préférence la majeure partie, du liquide coulant dans la zone de distillation, de préférence coulant dans la zone de rectification et de façon encore plus préférée coulant à un niveau intermédiaire de la zone de rectification, l'effluent de la zone réactionnelle étant au moins en partie, de préférence en majeure partie, réintroduit dans la zone de distillation à la hauteur d'au moins un niveau de réintroduction, de manière à assurer la continuité de la distillation, et de façon à sortir finalement en tête de la zone de distillation un effluent très appauvri en composés insaturés comprenant au plus six atomes de carbone par molécule, et en fond de zone de distillation un effluent appauvri en composés insaturés comprenant au plus six atomes de carbone par molécule, ledit procédé étant caractérisé en ce que la zone d'hydrogénation est au moins en partie externe à la zone de distillation.

Le niveau de réintroduction est généralement situé sensiblement au-dessous ou sensiblement au-dessus ou sensiblement à la même hauteur d'au moins un niveau de prélèvement, de préférence dudit niveau de prélèvement.

La charge qui alimente la zone de distillation est introduite dans ladite zone généralement au moins à un niveau de ladite zone, de préférence principalement à un seul niveau de ladite zone.

La zone de distillation comprend généralement au moins une colonne munie d'au moins un interne de distillation choisi dans le groupe formé par les plateaux, les garnissages en vrac et les garnissages structurés, ainsi qu'il est connu de l'homme du métier, tel que l'efficacité globale totale est au moins égale à cinq étages théoriques. Dans les cas connus de l'homme du métier où la mise en oeuvre d'une seule colonne pose des problèmes, on préfère généralement scinder ladite zone de façon à utiliser finalement au moins deux colonnes qui, mises bout à bout, réalisent ladite zone, c'est-à-dire que les zones de rectification, éventuellement réactionnelle et d'épuisement se répartissent sur les colonnes. En pratique, lorsque la zone réactionnelle est au moins en partie interne à la zone de distillation, la zone de rectification ou la zone d'épuisement, et de préférence la zone d'épuisement, peut généralement se trouver dans au moins une colonne différente de la colonne comprenant la partie interne de la zone réactionnelle.

La zone réactionnelle d'hydrogénation comprend généralement au moins un lit catalytique d'hydrogénation, de préférence de 2 à 4 lit(s) catalytique(s) ; dans le cas où au moins deux lits catalytiques se trouvent incorporés dans la zone de distillation, ces deux lits sont éventuellement séparés par au moins un interne de distillation. La zone réactionnelle d'hydrogénation réalise au moins partiellement l'hydrogénation du benzène présent dans la charge, généralement de telle façon que la teneur en benzène de l'effluent de tête soit au maximum égale à une certaine teneur, et ladite zone réactionnelle réalise au moins en partie, de préférence en majeure partie, l'hydrogénation de tout composé insaturé comprenant au plus six atomes de carbone par molécule et différent du benzène, éventuellement présent dans la charge.

Le procédé selon l'invention est tel que la zone réactionnelle d'hydrogénation est au moins en partie externe à la zone de distillation. Généralement, le procédé selon l'invention comprend de 1 à 6, de préférence de 1 à 4 niveau(x) de prélèvement qui alimente(nt) la partie externe de la zone d'hydrogénation. Une partie de la partie externe de la zone d'hydrogénation qui est alimentée par un niveau de prélèvement donné si la partie externe de la zone d'hydrogénation comprend au moins deux niveaux de prélèvement comprend généralement au moins un réacteur, de préférence un seul réacteur. Si ladite partie de la partie externe comprend au moins deux lits catalytiques répartis dans au moins deux réacteurs, lesdits réacteurs sont disposés en série ou en parallèle et chacun desdits réacteurs est de préférence alimenté par un niveau de prélèvement distinct du niveau de prélèvement qui alimente l'(es) autre(s) réacteur(s).

Le procédé selon l'invention, lui, concerne des réactions produisant un (ou plusieurs) produits de réaction ayant des points d'ébullition inférieurs et/ou presque identiques au point d'ébullition des réactifs, plus particulièrement le cas de l'hydrogénation des oléfines ayant au plus six atomes de carbone dans leur molécule et le benzène dans la fraction légère du réformat (voir tableau 1 ci-dessous). Dans cette coupe, les oléfines sont généralement de nature ramifiée (non linéaire) et les alcanes correspondant sont plus légers que lesdites oléfines. Le benzène, un autre réactif dans cette coupe, diffère de très peu en température d'ébullition du produit principal de sa réaction d'hydrogénation, le cyclohexane (différence de température d'ébullition de 0,6°C). Donc, sous des conditions nécessaires pour assurer que les produits plus lourds restent au fond de colonne, le cyclohexane est généralement partagé entre les effluents en tête et au fond de colonne. Un autre produit issu de la réaction d'hydrogénation du benzène est le méthylcyclohexane. Ce produit est particulièrement favorisé par des catalyseurs d'hydrogénation ayant des fortes acidités. Un des catalyseurs particulièrement préféré, selon l'invention, et le platine sur alumine chloré et/ou fluoré. Ce type de catalyseur présente une acidité relativement importante et donc favorise la réaction d'hydrogénation avec isomérisation du benzène en méthylcyclohexane, qui est caractérisé par un point d'ébullition largement inférieur à celui du benzène.

**Tableau 1**

| Composés à hydrogener et produits | Temp. d'ébullition (°C) | Selon l'invention les composés distillent |
|---|---|---|
| 2-méthyl butène-1 (réactif) | 31,2 | en tête |
| 3-méthyl butène-2 (réactif) | 38,6 | en tête |
| 2-méthylbutane (produit) | 27,8 | en tête |
| benzène (réactif) | 80,1 | en tête |
| cyclohexane (produit) | 80,7 | en tête/au fond |
| méthylcyclopentane (produit) | 71,8 | en tête |

Le procédé selon l'invention permet d'hydrogéner une grande partie du (ou des) composé(s) à hydrogéner à l'extérieur de la zone de distillation éventuellement sous des conditions de pression et/ou de température différente à celle utilisé dans la colonne. De préférence, la température à l'entrée (respectivement la température à la sortie) d'un lit catalytique de la zone d'hydrogénation située à l'extérieur de la colonne, est sensiblement semblable, c'est-à-dire que l'écart est sensiblement inférieur à 10°C, à la température à la hauteur du niveau de prélèvement (respectivement du niveau de réintroduction). La réaction d'hydrogénation est une réaction exothermique. Dans certains cas, la quantité de réactif à hydrogéner est importante. Pour limiter la vaporisation des effluents de cette réaction, on peut avantageusement effectuer la réaction d'hydrogénation dans la zone située à l'extérieur de la colonne à une pression plus élevée que celle utilisée à l'intérieur de la zone de distillation. Cette augmentation de pression permet aussi une dissolution accrue du flux gazeux contenant de l'hydrogène dans la phase liquide contenant le (ou les) composé(s) à hydrogéner.

Le procédé selon l'invention est tel que l'écoulement du liquide à hydrogéner est généralement co-courant à l'écoulement du flux gazeux comprenant de l'hydrogène, pour tout lit catalytique de la partie externe de la zone d'hydrogénation.

Selon un des modes de réalisation préférés de l'invention, le procédé selon l'invention est tel que la zone d'hydrogénation est à la fois partiellement incorporée dans la zone de distillation, c'est-à-dire interne à la zone de distillation, et partiellement externe à la zone de distillation. Selon un tel mode de réalisation, la zone d'hydrogénation comprend au moins deux, de préférence au moins trois lits catalytiques, au moins un lit catalytique étant interne à la zone de distillation, et au moins un lit catalytique étant externe à la zone de distillation. Dans le cas où la partie externe de la zone d'hydrogénation comporte au moins deux lits catalytiques, chaque lit catalytique est alimenté par un seul niveau de prélèvement, de préférence associé à un seul niveau de réintroduction, ledit niveau de prélèvement étant distinct du niveau de prélèvement qui alimente l'(es) autre(s) lit(s) catalytique(s). Généralement, le liquide à hydrogéner, soit partiellement, soit totalement, circule d'abord dans la partie externe de la zone d'hydrogénation puis dans la partie interne de ladite zone d'hydrogénation. Pour la partie de la zone réactionnelle interne à la zone de distillation, le prélèvement de liquide est fait naturellement par écoulement dans la partie de la zone réactionnelle interne à la zone de distillation, et la réintroduction de liquide en zone de distillation se fait aussi naturellement par écoulement du liquide à partir de la zone réactionnelle interne à la zone de distillation. De plus, le procédé selon l'invention est de préférence tel que l'écoulement du liquide à hydrogéner est co-courant ou contre courant, de préférence co-courant, à l'écoulement du flux gazeux comprenant de l'hydrogène, pour tout lit catalytique de la partie interne de la zone d'hydrogénation, et de façon encore plus préférée tel que l'écoulement du liquide à hydrogéner est co-courant à l'écoulement du flux gazeux comprenant de l'hydrogène et tel que la vapeur est séparée dudit liquide, pour tout lit catalytique de la partie interne de la zone d'hydrogénation.

Selon un autre des modes de réalisation préférés du procédé selon l'invention, indépendant du mode de réalisation précédent, la zone d'hydrogénation est en totalité externe à la zone de distillation. Elle a alors les caractéristiques de la partie externe de la zone d'hydrogénation du mode de réalisation précédent.

Pour la réalisation de l'hydrogénation selon le procédé de l'invention, le rapport molaire théorique d'hydrogène nécessaire pour la conversion désirée du benzène est de 3. La quantité d'hydrogène distribuée avant ou dans la zone d'hydrogénation est éventuellement en excès par rapport à cette stoechiométrie, et ce d'autant plus que l'on doit hydrogéner, en plus du benzène présent dans la charge, au moins partiellement tout composé insaturé comprenant au plus six atomes de carbone par molécule et présent dans ladite charge. L'hydrogène en excès, si il en existe, peut être avantageusement récupéré par exemple selon l'une des techniques décrites ci-après. Selon une première technique, l'hydrogène en excès qui sort de la zone réactionnelle est récupéré, puis comprimé et réutilisé dans ladite zone réactionnelle. Selon une seconde technique, l'hydrogène en excès qui sort de la zone réactionnelle est récupéré, puis injecté en amont des étapes de compression associées à une unité de réformage catalytique, en mélange avec de l'hydrogène provenant de ladite unité, ladite unité opérant de préférence à basse pression, c'est-à-dire généralement une pression inférieure à 8 bar (1 bar = 10⁵ Pa).

L'hydrogène, compris dans le flux gazeux, utilisé dans le procédé de l'invention pour l'hydrogénation des composés insaturés comprenant au plus six atomes de carbone par molécule peut provenir de toutes sources produisant de l'hydrogène à au moins 50 % volume de pureté, de préférence au moins 80 % volume de pureté et de façon encore plus préférée au moins 90 % volume de pureté. Par exemple, on peut citer l'hydrogène provenant des procédés de réformage catalytique, de méthanation, de P.S.A. (adsorption par alternance de pression), de génération éléctrochimique ou de vapocraquage.

Un des modes de réalisation préférés du procédé selon l'invention, indépendant ou non des modes de réalisation précédents, est tel que l'effluent de fond de la zone de distillation est mélangé au moins en partie à l'effluent de tête de ladite zone. Le mélange ainsi obtenu peut, après stabilisation éventuelle, être utilisé comme carburant soit directement, soit par incorporation aux fractions carburants.

Lorsque la zone d'hydrogénation est au moins en partie incorporée à la zone de distillation, le catalyseur d'hydrogénation peut être disposé dans ladite partie incorporée suivant les différentes technologies proposées pour conduire des distillations catalytiques. Elles sont essentiellement de deux types.

Suivant le premier type de technologies, la réaction et la distillation procèdent simultanément dans le même espace physique, comme l'enseignent par exemple la demande de brevet WO-A-90/02.603, les brevets US-A-4.471.154, US-A-4.475.005, US-A-4.215.011, US-A-4.307.254, US-A-4.336.407, US-A-4.439.350, US-A-5.189.001, US-A-5.266.546, US-A-5.073.236, US-A-5.215.011, US-A-5.275.790, US-A-5.338.517, US-A-5.308.592, US-A-5.236.663, US-A-5.338.518, ainsi que les brevets EP-B1-0.008.860, EP-B1-0.448.884, EP-B1-0.396.650 et EP-B1-0.494.550 et la demande de brevet EP-A1-0.559.511. Le catalyseur est alors généralement en contact avec une phase liquide descendante, générée par le reflux introduit au sommet de la zone de distillation, et avec une phase vapeur ascendante, générée par la vapeur de rebouillage introduite en fond de zone. Selon ce type de technologies, le flux gazeux comprenant de l'hydrogène nécessaire à la zone réactionnelle, pour la réalisation du procédé selon l'invention, pourrait être joint à la phase vapeur, sensiblement à l'entrée d'au moins un lit catalytique de la zone réactionnelle.

Suivant le second type de technologies, le catalyseur est disposé de telle façon que la réaction et la distillation procèdent généralement de manière indépendante et consécutive, comme l'enseignent par exemple les brevets US-A-4.847.430, US-A-5.130.102 et US-A-5.368.691, la vapeur de la distillation ne traversant pratiquement pas tout lit catalytique de la zone réactionnelle. Ainsi, si l'on utilise ce type de technologie, le procédé selon l'invention est généralement tel que l'écoulement du liquide à hydrogéner est co-courant à l'écoulement du flux gazeux comprenant de l'hydrogène et tel que la vapeur de distillation n'est pratiquement pas en contact avec le catalyseur (ce qui se traduit généralement en pratique par le fait que ladite vapeur est séparée dudit liquide à hydrogéner), pour tout lit catalytique de la partie interne de la zone d'hydrogénation. De tels systèmes comportent généralement au moins un dispositif de distribution de liquide qui peut être par exemple un répartiteur de liquide, dans tout lit catalytique de la zone réactionnelle. Néanmoins, dans la mesure où ces technologies ont été conçues pour des réactions catalytiques intervenant entre des réactifs liquides, elles ne peuvent convenir sans modification pour une réaction catalytique d'hydrogénation, pour laquelle l'un des réactifs, l'hydrogène, est à l'état gazeux. Pour tout lit catalytique de la partie interne de la zone d'hydrogénation, il est donc généralement nécessaire d'adjoindre un dispositif de distribution de flux gazeux comprenant de l'hydrogène, par exemple selon l'une des trois techniques décrites ci-après. Ainsi, la partie interne de la zone d'hydrogénation comporte au moins un dispositif de distribution de liquide et au moins un dispositif de distribution de flux gazeux comprenant de l'hydrogène dans tout lit catalytique de la zone d'hydrogénation interne à la zone de distillation. Selon une première technique, le dispositif de distribution de flux gazeux comprenant de l'hydrogène est disposé avant le dispositif de distribution de liquide, et donc avant le lit catalytique. Selon une deuxième technique, le dispositif de distribution de flux gazeux comprenant de l'hydrogène est disposé au niveau du dispositif de distribution de liquide, de telle façon que le flux gazeux comprenant de l'hydrogène soit introduit dans le liquide avant le lit catalytique. Selon une troisième technique, le dispositif de distribution de flux gazeux comprenant de l'hydrogène est disposé après le dispositif de distribution de liquide, et donc au sein du lit catalytique, de préférence non loin dudit dispositif de distribution du liquide dans ledit lit catalytique. Les termes "avant" et "après" utilisés ci-avant s'entendent par rapport au sens de circulation du liquide qui va traverser le lit catalytique.

Une des réalisations préférées du procédé selon l'invention est telle que le catalyseur de la partie interne de la zone d'hydrogénation est disposé dans la zone réactionnelle suivant le dispositif de base décrit dans le brevet US-A-5.368.691, aménagé de manière que tout lit catalytique de la partie interne de la ozne d'hydrogénation soit alimenté par un flux gazeux comprenant de l'hydrogène, régulièrement distribué à sa base, par exemple selon l'une des trois techniques décrites ci-avant. Suivant cette technologie, si la zone de distillation comprend une seule colonne et si la zone d'hydrogénation est en totalité interne à ladite colonne, le catalyseur compris dans tout lit catalytique, interne à la zone de distillation, est alors en contact avec une phase liquide ascendante, générée par le reflux introduit au sommet de la colonne de distillation, et avec le flux gazeux comprenant de l'hydrogène qui circule dans le même sens que le liquide; le contact avec la phase vapeur de la distillation étant évité en faisant transiter cette dernière par au moins une cheminée spécialement aménagée.

Lorsque la zone d'hydrogénation est au moins en partie interne à la zone de distillation, les conditions opératoires de la partie de la zone d'hydrogénation interne à la zone de distillation sont liées aux conditions opératoires de la distillation. La distillation peut être par exemple conduite de manière que son produit de fond contienne la majeure partie du cyclohexane et des isoparaffines à 7 atomes de carbone de la charge, ainsi que du cyclohexane formé par hydrogénation du benzène. Elle est réalisée sous une pression généralement comprise entre 2 et 20 bar, de préférence entre 4 et 10 bar (1 bar = 10⁵ Pa), avec un taux de reflux compris entre 1 et 10, et de préférence compris entre 3 et 6. La température de tête de zone est comprise généralement entre 40 et 180°C et la température de fond de zone est comprise généralement entre 120 et 280°C. La réaction d'hydrogénation est conduite dans des conditions qui sont le plus généralement intermédiaires entre celles établies en tête et en fond de zone de distillation, à une température comprise entre 100 et 200°C, et de préférence comprise entre 120 et 180°C, et à une pression comprise entre 2 et 20 bar, de préférence entre 4 et 10 bar. Le liquide soumis à l'hydrogénation est alimenté par un flux gazeux comprenant de l'hydrogène dont le débit dépend de la concentration en benzène dans ledit liquide et, plus généralement, des composés insaturés comportant au plus six atomes de carbone par molécule de la charge de la zone de distillation. Il est généralement au moins égal au débit correspondant à la stoechiométrie des réactions d'hydrogénation en jeu (hydrogénation du benzène et des autres composés insaturés comportant au plus six atomes de carbone par molécule, compris dans la charge d'hydrogénation) et au plus égal au débit correspondant à 10 fois la stoechiométrie, de préférence compris entre 1 et 6 fois la stoechiométrie, de manière encore plus préférée compris entre 1 et à 3 fois la stoechiométrie.

Dans la partie externe de la zone d'hydrogénation, le catalyseur est disposé dans tout lit catalytique suivant toute technologie connue de l'homme de métier dans des conditions opératoires (température, pression...) indépendantes ou non, de préférence indépendantes, des conditions opératoires de la zone de distillation.

Dans la partie de la zone d'hydrogénation externe à la zone de distillation, les conditions opératoires sont généralement les suivantes. La pression requise pour cette étape d'hydrogénation est généralement comprise entre 1 et 60 bar absolus, de préférence entre 2 et 50 bar et de façon encore plus préférée entre 5 et 35 bar. La température opératoire de la zone d'hydrogénation est généralement comprise entre 100 et 400 °C, de préférence entre 120 et 350 °C et de façon préférée entre 140 et 320 °C. La vitesse spatiale au sein de ladite zone d'hydrogénation, calculée par rapport au catalyseur, est généralement comprise entre 1 et 50 et plus particulièrement entre 1 et 30 h⁻¹ (volume de charge par volume de catalyseur et par heure). Le débit d'hydrogène correspondant à la stoechiométrie des réactions d'hydrogénation en jeu est compris entre 0,5 et 10 fois ladite stoechiométrie, de préférence entre 1 et 6 fois ladite stoechiométrie et de façon encore plus préférée entre 1 et 3 fois ladite stoechiométrie. Mais les conditions de température et de pression peuvent aussi, dans le cadre du procédé de la présente invention, être comprises entre celles qui sont établies en tête et en fond de zone de distillation.

De façon plus générale, quelle que soit la position de la zone d'hydrogénation par rapport à la zone de distillation, le catalyseur utilisé dans la zone d'hydrogénation selon le procédé de la présente invention comprend généralement au moins un métal choisi dans le groupe formé par le nickel et le platine, utilisé tel quel ou de préférence déposé sur un support. Le métal doit généralement se trouver sous forme réduite au moins pour 50 % en poids de sa totalité. Mais tout autre catalyseur d'hydrogénation connu de l'homme du métier peut également être choisi.

Lors de l'utilisation du platine, le catalyseur peut contenir avantageusement au moins un halogène dans une proportion en poids par rapport au catalyseur comprise entre 0,2 et 2 %. De manière préférée, on utilise le chlore ou le fluor ou la combinaison des deux dans une proportion par rapport au poids total de catalyseur comprise entre 0,2 et 1,5 %. Dans le cas de l'utilisation d'un catalyseur contenant du platine, on utilise généralement un catalyseur tel que la taille moyenne des cristallites de platine est inférieure à 60.10⁻¹⁰ m, de préférence inférieure à 20.10⁻¹⁰ m, de façon encore plus préférée inférieure à 10.10⁻¹⁰ m. De plus, la proportion totale de platine par rapport au poids total de catalyseur est généralement comprise entre 0,1 et 1 % et de façon préférée entre 0,1 et 0,6 %.

Dans le cas de l'utilisation du nickel, la proportion de nickel par rapport au poids total de catalyseur est comprise entre 5 et 70 %, plus particulièrement entre 10 et 70 % et de façon préférée entre 15 et 65 %. De plus, on utilise généralement un catalyseur tel que la taille moyenne des cristallites de nickel est inférieure à 100.10⁻¹⁰ m, de préférence inférieure à 80.10⁻¹⁰ m, de façon encore plus préférée inférieure à 60.10 ¹⁰ m.

Le support est généralement choisi dans le groupe formé par l'alumine, les silice-alumines, la silice, les zéolithes, le charbon actif, les argiles, les ciments alumineux, les oxydes de terres rares et les oxydes alcalino-terreux, seuls ou en mélange. On utilise de préférence un support à base d'alumine ou de silice, de surface spécifique comprise entre 30 et 300 m²/g, de préférence entre 90 et 260 m²/g.

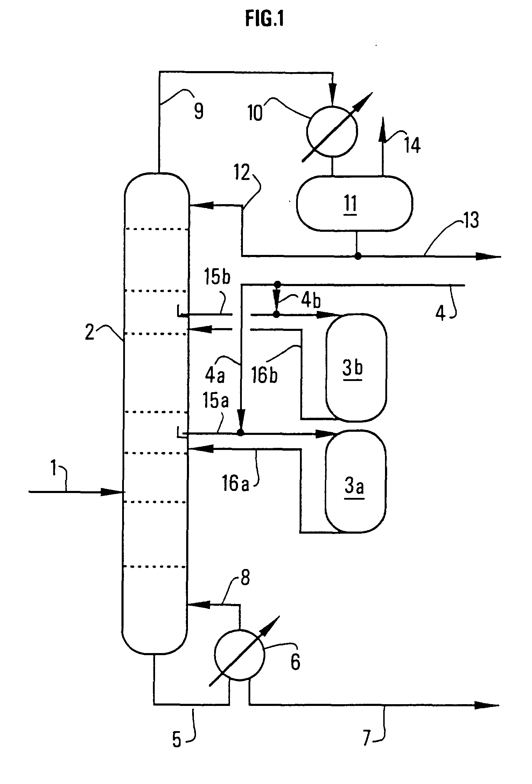

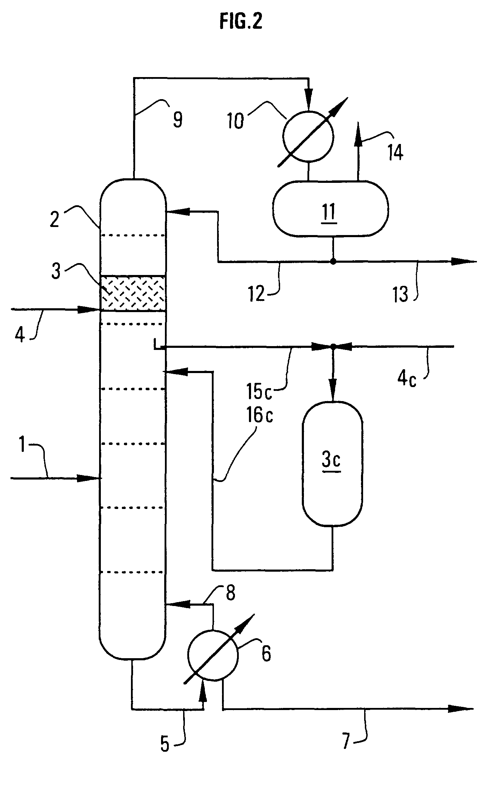

Les figures 1 et 2 constituent chacune une illustration d'une possibilité de réalisation du procédé selon l'invention. Les dispositifs similaires sont représentés par les mêmes chiffres sur toutes les figures.

Une première réalisation du procédé est représentée sur la figure 1. Le réformat brut C₅⁺, contenant généralement de faibles quantités d'hydrocarbures C₄⁻, est envoyé dans une colonne 2 par la ligne 1. Ladite colonne contient des internes de distillation, qui sont par exemple dans le cas représenté sur la figure 1 des plateaux ou du garnissage, représentés en partie par des traits pointillés sur ladite figure.

En pied de colonne, la fraction la moins volatile du réformat, constituée principalement par les hydrocarbures à 7 atomes de carbone et plus, est récupérée par la ligne 5, rebouillie dans l'échangeur 6 et évacuée par la ligne 7. La vapeur de rebouillage est réintroduite dans la colonne par la ligne 8. En tête de colonne, la vapeur d'hydrocarbures légers, c'est-à-dire comprenant principalement 6 atomes de carbone et moins par molécule, est envoyée par la ligne 9 dans un condenseur 10 puis dans un ballon 11 où intervient une séparation entre une phase liquide et une phase vapeur constituée principalement par l'hydrogène éventuellement en excès. La phase vapeur est évacuée du ballon par la ligne 14. La phase liquide du ballon 11 est renvoyée pour partie, par la ligne 12, en tête de colonne pour en assurer le reflux tandis que l'autre partie constitue le distillat liquide qui est évacué par la ligne 13.

Au moyen d'un plateau de soutirage disposé dans la zone de rectification de la colonne, on soutire par la ligne 15a un liquide que l'on envoie en tête d'un réacteur d'hydrogénation 3a, après adjonction d'hydrogène par les lignes 4 puis 4a. L'effluent du réacteur d'hydrogénation est recyclé à la colonne par la ligne 16a, qui est ici optionnellement représentée sous la ligne 15a de prélèvement.

De même on soutire par la ligne 15b un liquide que l'on envoie dans le réacteur d'hydrogénation 3b, après adjonction d'hydrogène par les lignes 4 et 4b, et l'on recycle à la colonne par la ligne 16b (optionnellement représentée sous la ligne 15b de prélèvement) l'effluent du réacteur d'hydrogénation.

Selon un second mode de réalisation du procédé, représenté sur la figure 2, le réformat brut C₅⁺, contenant généralement de faibles quantités d'hydrocarbures C₄⁻, est envoyé par la ligne 1 dans une colonne de distillation 2, munie d'internes de distillation qui sont par exemple dans le cas de la figure 2 des plateaux de distillation, ainsi que d'un interne catalytique 3 contenant un catalyseur d'hydrogénation et alimenté par de l'hydrogène par la ligne 4.

Les effluents de tête et de fond de la colonne sont traités comme décrit ci-dessus pour la première réalisation du procédé. D'un plateau de soutirage disposé dans la zone de rectification de la colonne, on prélève par la ligne 15c un liquide qui, après adjonction d'hydrogène par la ligne 4c, est introduit dans le réacteur d'hydrogénation 3c. L'effluent du réacteur d'hydrogénation est recyclé à la colonne de distillation par la ligne 16c, à un niveau représenté optionnellement sous le niveau de soutirage du liquide.

### EXEMPLES

Les exemples qui suivent illustrent l'invention.

### Exemple 1 : (Comparatif)

On utilise une colonne de distillation métallique de diamètre 50 mm, rendue adiabatique par des enveloppes chauffantes dont les températures sont régulées de manière à reproduire le gradient de température qui s'établit dans la colonne. Sur une hauteur de 4,5 m, la colonne comporte, de la tête vers le pied : une zone de rectification composée de 11 plateaux perforés à déversoir et descente, une zone de distillation catalytique hydrogénante et une zone d'épuisement composée de 63 plateaux perforés. La zone de distillation catalytique hydrogénante est constituée de trois plateaux réactifs, qui sont ici des plateaux perforés de distillation, à déversoir et descente, dont les déversoirs sont surélevés de 3,5 cm et dont le volume compris entre le niveau du sommet du déversoir et le plateau peut être garni de catalyseur. Un grillage métallique placé au sommet du déversoir fait office de filtre pour éviter que des particules de catalyseur ne soient évacuées avec le liquide quittant le plateau.

Chacune des trois cellules est garnie de 36 g de catalyseur au nickel vendu par la société PROCATALYSE sous la référence LD 746. Sur le 37ème plateau de la colonne, en partant du fond, on introduit 260 g/h d'un réformat comprenant essentiellement des hydrocarbures ayant au moins 5 atomes de carbone dans leur molécule, dont la composition est présentée dans le tableau 1. On introduit également à la base de chaque cellule un débit de 18 Nl/h d'hydrogène. La colonne est mise en régime en établissant un taux de reflux égal à 5 et en régulant la température de fond à 176°C et la pression à 7 bar.

En régime stabilisé, on recueille à raison de 138 g/h et 113 g/h, respectivement un résidu et un distillat liquide dont les compositions sont données dans le tableau 2. Une faible partie du distillat, constituée des hydrocarbures les plus légers, est évacuée de la colonne avec l'hydrogène excédentaire et n'est pas comptabilisée. Des analyses des effluents on peut déduire que les taux d'hydrogénation des oléfines et du benzène de la charge sont respectivement de 100 et 55%, tandis que le toluène n'est pas affecté.

### Exemple 2 : (comparatif)

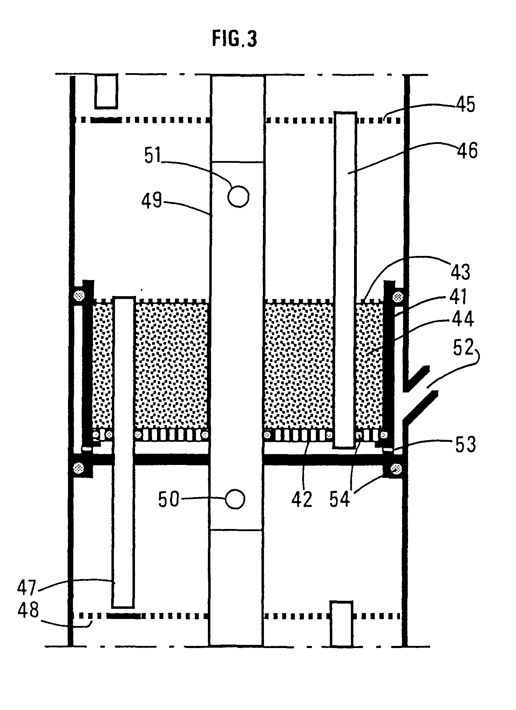

On utilise le même appareillage que celui décrit dans l'exemple 1, mais avec une zone de distillation catalytique de conception différente. La zone de distillation catalytique hydrogénante est ici constituée de trois doublets de distillation réactive, chaque doublet étant constitué lui-même par une cellule catalytique surmontée de trois plateaux perforés. Le détail de construction d'une cellule catalytique ainsi que sa disposition dans la colonne sont représentés schématiquement sur la figure 3. La cellule catalytique 41 consiste en un conteneur cylindrique à fond plat, d'un diamètre extérieur inférieur de 2 mm au diamètre intérieur de la colonne. Elle est munie à sa partie inférieure, au dessus du fond, d'une grille 42 qui sert à la fois de support pour le catalyseur et de distributeur pour l'hydrogène, et à sa partie supérieure, d'une grille de retenue du catalyseur 43, dont la hauteur peut être variée. Le catalyseur 44 remplit tout le volume compris entre ces deux grilles. La cellule catalytique reçoit le liquide provenant du plateau de distillation supérieur 45, par la descente 46. Après avoir parcouru la cellule dans le sens ascendant, le liquide est évacué par débordement par la descente 47 et coule sur le plateau de distillation inférieur 48. La vapeur issue du plateau inférieur 48 emprunte la cheminée centrale 49 solidaire de la cellule, en pénétrant par des orifices 50 (un seul apparent sur la figure) et en ressortant sous le plateau supérieur 45 par des orifices 51 (un seul apparent sur la figure). L'hydrogène est introduit au pied de la cellule catalytique par la tubulure 52, puis par les orifices 53 (six au total) répartis sur la périphérie de la cellule, au voisinage immédiat du fond. Des joints d'étanchéité 54 évitent toute fuite d'hydrogène avant son arrivée sur le lit catalytique.

Chacune des trois cellules est garnie de 36 g de catalyseur au nickel vendu par la société PROCATALYSE sous la référence LD 746. Sur le 37ème plateau de la colonne, en partant du fond, on introduit 260 g/h de la même charge que celle utilisée dans l'exemple 2 et dont la composition est présentée dans la deuxième colonne du tableau. On introduit également à la base de chaque cellule un débit de 6 Nl/h d'hydrogène. La colonne est mise en régime en établissant un taux de reflux égal à 5 et en régulant la température de fond à 176°C et la pression à 7 bar.

En régime stabilisé, on recueille à raison de 143 g/h et 106 g/h, respectivement un résidu et un distillat liquide dont les compositions sont données dans le tableau 2. Une faible partie du distillat, constituée des hydrocarbures les plus légers, est évacuée de la colonne avec l'hydrogène excédentaire et n'est pas comptabilisée. Des analyses des effluents on peut déduire que les taux d'hydrogénation des oléfines et du benzène de la charge sont respectivement de 100 et 87%, tandis que le toluène n'est pas affecté.

**Tableau 2 :**

| compositions de la charge et des effluents de la colonne catalytique | | | | | |
|---|---|---|---|---|---|
| | compositions, en % poids | | | | |
| | exemple 1 | | | exemple 2 | |
| | charge | résidu | distillat liq. | résidu | distillat liq. |
| C5 et plus légers | 7,65 | | 10,22 | | 7,36 |
| dont: oléfines | 0,11 | | 0 | | 0 |
| C6 | 44,83 | 9,55 | 89,78 | 12,4 | 92,59 |
| dont : oléfines | 0,13 | | 0 | | 0 |
| : benzène | 6,07 | 0,63 | 5,45 | 0,07 | 1,84 |
| : cyclohexane | 1,1 | 8,34 | 0,34 | 12,16 | 0,73 |
| C7 : | 42,55 | 80,72 | | 78,27 | 0,05 |
| dont : toluène | 4,78 | 9,1 | | 8,87 | |
| C8 et plus lourds | 4,97 | 9,73 | | 9,33 | |
| conversion des oléfines | 100% | | | 100% | |
| conversion du benzène | 55% | | | 87% | |
| conversion de l'hydrogène | 15% | | | 70% | |

Il est constaté que le procédé selon l'exemple 2 permet une meilleure conversion du benzène et une meilleure conversion de l'hydrogène par rapport au premier exemple. Néanmoins le taux d'utilisation de l'hydrogène peut être largement amélioré.

### Exemple 3 :

Pour démontrer le fonctionnement d'un réacteur à lit fixe, qui peut être utilisé selon l'invention, un réacteur tubulaire de 2 cm de diamètre interne est chargé de 36g de catalyseur pré-réduit au platine supporté sur l'alumine chlorée vendu par la société PROCATALYSE sous la référence LD412. Une charge synthétique a été préparée pour simuler la phase liquide à hydrogéner prélevée sur le 37ème plateau d'une colonne opérant sous les conditions et la même charge que celles indiquées dans les exemples 1 et 2. Le débit de charge envoyé au fond du réacteur est de 0,3 l/h à une température de 141°C. Le catalyseur est activé sous un flux 60l/h d'hydrogène pendant 2 heures à 150°C puis l'unité est purgée sous azote avant d'envoyer la charge dans l'unité. Le rapport molaire hydrogène/benzène est de 3,3. Le réacteur fonctionne sous 25 bar de pression.

On constate (voir tableau 3) que l'hydrogénation du benzène et des oléfines dans la charge est quasiment complète. De plus l'excès d'hydrogène nécessaire pour pousser la conversion des composés insaturés est faible, ce qui permet une bonne utilisation de l'hydrogène. On constate également qu'une certaine quantité du benzène est transformée en méthylcyclopentane. Ce point est particulièrement intéressant pour la production de carburant automobile car l'indice d'octane du méthylcyclopentane est plus élevé que celle du cyclohexane.

### Exemple 4.:

On procède exactement comme dans l'exemple 3 sauf qu'on utilise 36 g de catalyseur pré-réduit au nickel vendu par la société PROCATALYSE sous la référence LD746. Le catalyseur est activé sous flux de 60l/h de l'azote pendant 16 heures à 180°C avant d'envoyer la charge dans l'unité.

Les résultats donnés dans le tableau 3 montrent que ce catalyseur est presque au même niveau d'activité que le LD412 pour l'hydrogénation du benzène. En revanche, le LD746 ne promeut pas la formation du méthylcyclopentane.

**Tableau 3 :**

| composition de la charge et des effluents pour les exemples 3 et 4. | | | |
|---|---|---|---|
| Composition en % poids | | | |
| | Charge | Effluent de l'exemple 3 | Effluent de l'exemple 4 |
| 2-méthyl butène-1 | 0,2 | 0 | 0 |
| 2-méthylbutène | 0 | 0,1 | 0,1 |
| 2-méthyl pentène-1 | 0,2 | 0 | 0 |
| 2-méthylpentane | 0 | 0,4 | 0,2 |
| n-pentane | 10,0 | 9,9 | 10,0 |
| n-hexane | 81,7 | 81,1 | 81,7 |
| méthylcyclopentane | 0 | 1,4 | 0 |
| benzène | 7,8 | 0,0 | 0,1 |
| cyclohexane | 0 | 6,4 | 7,7 |
| autre | 0,1 | 0,7 | 0,2 |
| Conversion des oléfines | | 100 % | 100 % |
| Conversion de benzène | | 100 % | 99 % |
| Conversion de l'hydrogène | | 92 % | 91 % |

### Exemple 5 :(comparatif)

Les performances du procédé selon l'exemple 2 sont ensuite mises en évidence avec une charge industrielle de réformat. La simulation de fonctionnement du procédé est réalisée pour un débit de 321,23 kmol/h de réformat ayant la composition indiquée dans le tableau 4. La colonne est composée de 30 plateaux théoriques et les positionnements numérotés de haut en bas sont les suivants : l'injection de la charge (plateau 16), les doublets catalytiques (plateaux 6, 8 et 10). Chaque doublet, fonctionnant en phase liquide et en écoulement ascendant, est chargé avec 3775 kg de catalyseur au nickel vendu par la société PROCATALYSE sous la référence LD746. Le rapport molaire hydrogène/benzène est de 6, chaque doublet catalytique est alimenté par un tiers de l'hydrogène. La pression au ballon de reflux est de 6.5 bara, la température de reflux est de 40 °C. La température du liquide avant mélange avec l'hydrogène est entre 120 et 130°C et celle de l'hydrogène est de 40 °C. Le rapport en poids reflux/charge est de 2.23. Les compositions des fractions réformat léger, vapeur de purge et réformat lourd sont indiquées dans le tableau 4.

### Exemple 6 :(selon l'invention)

On utilise le même catalyseur, la même charge et la même colonne que ceux qui sont décrits dans l'exemple 5, mais les réacteurs d'hydrogénation sont situés à l'extérieur de la colonne de distillation. L'unité est donc représentée par la figure 1 à l'exception d'un troisième réacteur (3c) non indiqué. La charge pour la colonne est injectée par la ligne 1 au plateau 16. Les charges pour les trois réacteurs 3a, 3b et 3c sont soutirées des plateaux 6, 8 et 10 respectivement via les lignes 15a, 15b et 15c. Elles reçoivent de l'hydrogène par les lignes 4a, 4b et 4c avant d'entrer dans les réacteurs fonctionnant en écoulement descendant et sous 20 bar de pression. Chaque réacteur est chargé de 3775 kg de catalyseur LD746. Le rapport molaire hydrogène/benzène est de 3.3, chaque doublet catalytique est alimenté par cette stoechiométrie. Les effluents des réacteurs 3a, 3b et 3c sont ré-injectés respectivement dans la colonne via les lignes 16a, 16b et 16c aux plateaux 5, 7 et 9. Toutes les autres conditions opératoires sont identiques à celles indiquées dans l'exemple 5. Les compositions simulées des fractions réformat léger (13), vapeur de purge (14) et réformat lourd (7) sont indiquées dans le tableau 5.
On constate que le procédé selon la présente invention, où au moins un des réacteurs d'hydrogénation du benzène et des composés oléfiniques dans la charge est situé à l'extérieur de la zone de distillation, permet par rapport aux procédés ayant des zones d'hydrogénation à l'intérieure de la colonne de baisser la quantité d'hydrogène (- 45 %) nécessaire pour obtenir le même taux de conversion du benzène, d'augmenter le rendement en réformat léger (+ 11 %) et de fortement diminuer la quantité de gaz non-condensés (- 85 %).

**Tableau 4**

| Composition de la charge et des effluents pour l'exemple 5. | | | | | |
|---|---|---|---|---|---|
| **Corps/Kmoles/h** | **charge** | **H2** | **Réformat Léger** | **Purge Vapeur** | **Réformat Lourd** |
| H2 | | 117,07 | 0,54 | 61,62 | 0,00 |
| butanes | 17,20 | | 12,07 | 5,13 | 0,00 |
| iso pentanes | 15,14 | | 13,14 | 2,33 | 0,00 |
| normal pentanes | 24,61 | | 21,74 | 2,87 | 0,00 |
| pentènes | 0,33 | | 0,00 | 0,00 | 0,00 |
| diméthylbutanes | 24,24 | | 21,85 | 2,39 | 0,00 |
| méthylcyclopentane | 26,24 | | 25,10 | 1,33 | 0,03 |
| hexènes | 0,22 | | 0,00 | 0,00 | 0,00 |
| hexanes | 16,15 | | 15,00 | 0,63 | 0,52 |
| Cyclohexane | 0,00 | | 1,00 | 0,03 | 17,09 |
| Benzène | 19,42 | | 0,09 | 0,00 | 1,21 |
| Paraffines C7 | 21,39 | | 0,02 | 0,00 | 21,37 |
| méthylcyclohexane | 0 | | 0,00 | 0,00 | 0,00 |
| Toluène | 40,72 | | 0,00 | 0,00 | 40,72 |
| Paraffines C8 | 1,37 | | 0,00 | 0,00 | 1,37 |
| Aromatiques C8 | 46,20 | | 0,00 | 0,00 | 46,20 |
| Composés C9 | 24,98 | | 0,00 | 0,00 | 24,98 |
| Composés C10+ | 34,02 | | 0,00 | 0,00 | 34,02 |

**Tableau 5**

| Composition de la charge et des effluents pour l'exemple 6. | | | | | |
|---|---|---|---|---|---|
| **Corps/Kmoles/h** | **charge** | **H2** | **Réformat Léger** | **Purge Vapeur** | **Réformat. Lourd** |
| H2 | | 64,64 | 0,59 | 9,14 | 0,00 |
| butanes | 17,20 | | 16,26 | 0,94 | 0,00 |
| iso pentanes | 15,14 | | 15,10 | 0,37 | 0,00 |
| normal pentanes | 24,61 | | 24,18 | 0,43 | 0,00 |
| pentènes | 0,33 | | 0,00 | 0,00 | 0,00 |
| diméthyl butanes | 24,24 | | 23,90 | 0,34 | 0,00 |
| méthylcyclopentane | 26,24 | | 26,20 | 0,23 | 0,03 |
| hexènes | 0,22 | | 0,00 | 0,00 | 0,00 |
| hexanes | 16,15 | | 15,54 | 0,09 | 0,52 |
| Cyclohexane | 0,00 | | 1,03 | 0,00 | 17,09 |
| Benzène | 19,42 | | 0,09 | 0,00 | 1,21 |
| Paraffines C7 | 21,39 | | 0,02 | 0,00 | 21,37 |
| méthyl cyclohexane | 0 | | 0,00 | 0,00 | 0,00 |
| Toluène | 40,72 | | 0,00 | 0,00 | 40,72 |
| Paraffines C8 | 1,37 | | 0,00 | 0,00 | 1,37 |
| Aromatiques C8 | 46,20 | | 0,00 | 0,00 | 46,20 |
| Composés C9 | 24,98 | | 0,00 | 0,00 | 24,98 |
| Composés C10+ | 34,02 | | 0,00 | 0,00 | 34,02 |

## Revendications

1. Procédé de traitement d'une charge, constituée en majeure partie par des hydrocarbures comportant au moins 5 atomes de carbone par molécule et comprenant au moins un composé insaturé comportant au plus six atomes de carbone par molécule dont du benzène, tel que l'on traite ladite charge dans une zone de distillation, comportant une zone d'épuisement et une zone de rectification, associée à une zone réactionnelle d'hydrogénation, comprenant au moins un lit catalytique, dans laquelle on réalise l'hydrogénation d'au moins une partie des composés insaturés, comprenant au plus six atomes de carbone par molécule et contenus dans la charge, en présence d'un catalyseur d'hydrogénation et d'un flux gazeux comprenant de l'hydrogène, la charge de la zone réactionnelle étant prélevée à la hauteur d'un niveau de prélèvement et représentant au moins une partie du liquide coulant dans la zone de rectification, l'effluent de la zone réactionnelle étant au moins en partie réintroduit dans la zone de distillation à la hauteur d'au moins un niveau de réintroduction, de manière à assurer la continuité de la distillation, et de façon à sortir finalement en tête de la zone de distillation un effluent très appauvri en composés insaturés comprenant au plus six atomes de carbone par molécule et en fond de zone de distillation un effluent appauvri en composés insaturés comprenant au plus six atomes de carbone par molécule, ledit procédé étant **caractérisé en ce que** la zone d'hydrogénation est au moins en partie externe à la zone de distillation.

2. Procédé selon la revendication 1 comprenant de 1 à 6 niveau(x) de prélèvement.

3. Procédé selon l'une des revendications 1 ou 2 comprenant de 1 à 4 niveau(x) de prélèvement.

4. Procédé selon l'une des revendications 1 à 3 tel que la distillation est réalisée sous une pression comprise entre 2 et 20 bar, avec un taux de reflux compris entre 1 et 10, la température de tête de zone de distillation étant comprise entre 40 et 180°C et la température de fond de zone de distillation étant comprise entre 120 et 280°C.

5. Procédé selon l'une des revendications 1 à 4 dans lequel la zone réactionnelle d'hydrogénation est en totalité externe à la zone de distillation.

6. Procédé selon l'une des revendications 1 à 4 dans lequel la zone d'hydrogénation est à la fois partiellement incorporée dans la zone de rectification de la zone de distillation et partiellement externe à la zone de distillation.

7. Procédé selon la revendication 6 tel que, pour la partie de la réaction d'hydrogénation interne à la zone de distillation, la réaction d'hydrogénation est conduite à une température comprise entre 100 et 200°C, à une pression comprise entre 2 et 20 bar, et le débit de l'hydrogène alimentant la zone d'hydrogénation est compris entre une fois et 10 fois le débit correspondant à la stoechiométrie des réactions d'hydrogénation en jeu.

8. Procédé selon l'une des revendications 1 à 7 tel que, pour la partie de la réaction d'hydrogénation externe à la zone de distillation, la pression requise pour cette étape d'hydrogénation est comprise entre 1 et 60 bar, la température est comprise entre 100 et 400°C, la vitesse spatiale au sein de la zone d'hydrogénation, calculée par rapport au catalyseur, est généralement comprise entre 1 et 50 h⁻¹ (volume de charge par volume de catalyseur et par heure), et le débit d'hydrogène correspondant à la stoechiométrie des réactions d'hydrogénation en jeu est compris entre 0,5 et 10 fois ladite stoechiométrie.

9. Procédé selon l'une des revendications 6 ou 7 tel que le catalyseur d'hydrogénation est en contact avec une phase liquide descendante et avec une phase vapeur ascendante, pour tout lit catalytique de la partie interne de la zone d'hydrogénation.

10. Procédé selon la revendication 9 tel que le flux gazeux comprenant de l'hydrogène nécessaire à la zone d'hydrogénation est joint à la phase vapeur, sensiblement à l'entrée d'au moins un lit catalytique de la zone d'hydrogénation.

11. Procédé selon l'une des revendications 6 ou 7 tel que l'écoulement du liquide à hydrogéner est co-courant à l'écoulement du flux gazeux comprenant de l'hydrogène, pour tout lit catalytique de la partie interne de la zone d'hydrogénation.

12. Procédé selon l'une des revendications 6 ou 7 tel que l'écoulement du liquide à hydrogéner est co-courant à l'écoulement du flux gazeux comprenant de l'hydrogène et tel que la vapeur de distillation n'est pratiquement pas en contact avec le catalyseur, pour tout lit catalytique de la partie interne de la zone d'hydrogénation.

13. Procédé selon la revendication 12 tel que la zone d'hydrogénation comporte au moins un dispositif de distribution de liquide dans tout lit catalytique de ladite zone et au moins un dispositif de distribution du flux gazeux comprenant de l'hydrogène dans tout lit catalytique de la zone d'hydrogénation interne à ladite zone.

14. Procédé selon la revendication 13 tel que le dispositif de distribution du flux gazeux comprenant de l'hydrogène est disposé avant le dispositif de distribution de liquide.

15. Procédé selon la revendication 13 tel que le dispositif de distribution du flux gazeux comprenant de l'hydrogène est disposé au niveau du dispositif de distribution de liquide.

16. Procédé selon la revendication 13 tel que le dispositif de distribution du flux gazeux comprenant de l'hydrogène est disposé après le dispositif de distribution de liquide.

17. Procédé selon l'une des revendications 1 à 16 tel que le catalyseur utilisé dans la zone d'hydrogénation comprend au moins un métal choisi dans le groupe formé par le nickel et le platine.

18. Procédé selon l'une des revendications 1 à 17 tel que le catalyseur utilisé dans la zone d'hydrogénation comprend un support.

19. Procédé selon l'une des revendications 1 à 18 tel que l'hydrogène éventuellement en excès qui sort en tête de la zone réactionnelle peut être récupéré, puis comprimé et réutilisé dans ladite zone réactionnelle.

20. Procédé selon l'une de revendications 1 à 18 tel que l'hydrogène éventuellement en excès, qui sort en tête de la zone réactionnelle est récupéré, puis injecté en amont des étapes de compression associées à une unité de réformage catalytique, en mélange avec de l'hydrogène provenant de ladit unité.

21. Procédé selon la revendication 20 tel que ladite unité de réformage catalytique opère à basse pression.

22. Procédé selon l'une des revendications 1 à 21 tel que la charge comprend au moins une oléfine comportant au plus six atomes de carbone par molécule.

## Claims

1. A process for treating a charge of which the major part is constituted by hydrocarbons comprising at least 5 carbon atoms per molecule and containing at least one unsaturated compound comprising at the most six carbon atoms per molecule including benzene, such that said charge is treated in a distillation zone, comprising a drainage zone and a stripping zone, associated with a hydrogenation reaction zone, comprising at least one catalytic bed, in which the hydrogenation takes place of at least part of the unsaturated compounds, comprising at the most six carbon atoms per molecule and contained in the charge, in the presence of a hydrogenation catalyst and a gaseous flow containing hydrogen, the charge of the reaction zone being removed at the height of a removal level and representing at least part of the liquid flowing in the stripping zone, the effluent of the reaction zone being at least in part reintroduced into the distillation zone at the height of at least one re-introduction level, in such a way as to ensure continuity of the distillation operation, and in such a way as to remove finally from the top of the distillation zone an effluent with a very depleted content of unsaturated compounds comprising at the most six carbon atoms per molecule and at the bottom of the distillation zone an effluent with a depleted content of unsaturated compounds comprising at the most six carbon atoms per molecule, said process being **characterised in that** the hydrogenation zone is at least partly outside the distillation zone.

2. A process according to Claim 1 comprising between 1 and 6 removal level(s).

3. A process according to either Claim 1 or Claim 2 comprising between 1 and 4 removal level(s).

4. A process according to one of Claims 1 to 3, such that distillation is carried out at a pressure of between 2 and 20 bar, with a reflux ratio of between 1 and 10, the temperature at the top of the distillation zone being between 40 and 180°C and the temperature at the bottom of the distillation zone being between 120 and 280°C.

5. A process according to one of Claims 1 to 4, wherein the hydrogenation reaction zone is completely outside the distillation zone.

6. A process according to one of Claims 1 to 4, wherein the hydrogenation zone is incorporated both partly inside the stripping zone of the distillation zone and partly outside the distillation zone.

7. A process according to Claim 6, such that with respect to the part of the hydrogenation reaction inside the distillation zone, the hydrogenation reaction is carried out at a temperature of between 100 and 200°C, at a pressure of between 2 and 20 bar, and the throughput of the hydrogen supplying the hydrogenation zone is between one and 10 times the throughput in accordance with the stoichiometry of the hydrogenation reactions involved.

8. A process according to one of Claims 1 to 7, such that with respect to the part of the hydrogenation reaction outside the distillation zone, the pressure required for that hydrogenation step is between 1 and 60 bar, the temperature is between 100 and 400°C, the space velocity inside the hydrogenation zone, calculated in relation to the catalyst, is usually between 1 and 50 h⁻¹ (volume of charge per volume of catalyst and per hour), and the hydrogen throughput in accordance with the stoichiometry of the hydrogenation reactions involved is between 0.5 and 10 times said stoichiometry.

9. A process according to either Claim 6 or Claim 7, such that in respect of any catalytic bed in the internal part of the hydrogenation zone the hydrogenation catalyst is in contact with a descending liquid phase and with an ascending vapour phase.

10. A process according to Claim 9, such that the gaseous flow comprising the hydrogen needed for the hydrogenation zone is joined to the vapour phase, substantially at the intake of at least one catalytic bed of the hydrogenation zone.

11. A process according to either Claim 6 or Claim 7, such that with respect to any catalytic bed in the inner part of the hydrogenation zone, the flow behaviour of the liquid for hydrogenation is co-current to the flow behaviour of the gaseous flow comprising hydrogen.

12. A process according to either Claim 6 or Claim 7, such that the flow behaviour of the liquid for hydrogenation is co-current to the flow behaviour of the gaseous flow comprising hydrogen, and such that with respect to any catalytic bed in the inner part of the hydrogenation zone, the distillation vapour is virtually not in contact with the catalyst.

13. A process according to Claim 12, such that the hydrogenation zone comprises at least one liquid dispensing device in any catalytic bed of said zone and at least one device for dispensing the gaseous flow comprising hydrogen in any catalytic bed of the hydrogenation zone inside said zone.

14. A process according to Claim 13, such that the device for dispensing the gaseous flow comprising hydrogen is disposed upstream of the liquid dispensing device.

15. A process according to Claim 13, such that the device for dispensing gaseous flow comprising hydrogen is disposed at the level of the liquid dispensing device.

16. A process according to Claim 13, such that the device for dispensing the gaseous flow comprising hydrogen is disposed downstream of the liquid dispensing device.

17. A process according to one of Claims 1 to 16, such that the catalyst used in the hydrogenation zone comprises at least one metal selected from the group formed by nickel and platinum.

18. A process according to one of Claims 1 to 17, such that the catalyst used in the hydrogenation zone comprises a support.

19. A process according to one of Claims 1 to 18, such that hydrogen which may be excessive issuing from the top of the reaction zone can be recovered, then compressed and reused in said reaction zone.

20. A process according to one of Claims 1 to 18, such that hydrogen which may be excessive issuing from the top of the reaction zone is recovered, then injected upstream of the compression stages associated with a catalytic reforming unit, mixed with the hydrogen coming from said unit.

21. A process according to Claim 20, such that said catalytic reforming unit operates at low pressure.

22. A process according to one of Claims 1 to 21, such that the charge comprises at least one olefin comprising at the most six carbon atoms per molecule.

## Patentansprüche

1. Verfahren zur Behandlung einer Charge, die zum überwiegenden Teil aus Kohlenwasserstoffen mit wenigstens 5 Kohlenstoffatomen pro Molekül besteht und wenigstens eine ungesättigte Verbindung mit höchstens sechs Kohlenstoffatomen pro Molekül, darunter Benzol, umfasst, derart, dass man diese Charge in einer Destillationszone behandelt, die eine Erschöpfungszone und eine Rektifikationszone, zugeordnet zu einer Hydrierreaktionszone aufweist, und zwar mit wenigstens einem katalytischen Bett, in welchem man die Hydrierung wenigstens eines Teils der ungesättigten Verbindungen mit höchstens sechs Kohlenstoffatomen pro Molekül, und zwar enthalten in der Charge, realisiert, in Gegenwart eines Hydrierkatalysators und eines Wasserstoff umfassenden Gasstroms, wobei die Charge aus der Reaktionszone in Höhe eines Entnahmeniveaus entnommen wird und wenigstens einen Teil der in der Rektifikationszone fließenden Flüssigkeit darstellt, wobei der Abstrom aus der Reaktionszone wenigstens zum Teil wieder in die Destillationszone auf der Höhe wenigstens eines Wiedereinführungsniveaus derart eingeführt wird, dass die Kontinuität der Destillation sichergestellt wird und derart, dass schließlich am Kopf der Destillationszone ein an ungesättigten Verbindungen stark verarmter Abstrom, der höchstens sechs Kohlenstoffatome pro Molekül hat und am Boden der Destillationszone ein Abstrom abgezogen wird, der an ungesättigten Verbindungen verarmt ist, die höchstens sechs Kohlenstoffatome pro Molekül umfassen, wobei das Verfahren sich dadurch auszeichnet, dass die Hydrierzone wenigstens zum Teil außerhalb der Destillationszone liegt.

2. Verfahren nach Anspruch 1, 1 bis 6 Entnahmeniveaus umfassend.

3. Verfahren nach einem der Ansprüche 1 oder 2, 1 bis 4 Entnahmeniveaus umfassend.

4. Verfahren nach einem der Ansprüche 1 bis 3, derart, dass die Destillation unter einem Druck zwischen 2 und 20 bar mit einem Rückflussverhältnis zwischen 1 und 10 durchgeführt wird, wobei die Kopftemperatur der Destillationszone zwischen 40 und 180°C und die Bodentemperatur der Destillationszone zwischen 120 und 280°C beträgt.

5. Verfahren nach einem der Ansprüche 1 bis 4, bei dem die Reaktionshydrierzone sich vollständig außerhalb der Destillationszone befindet.

6. Verfahren nach einem der Ansprüche 1 bis 4, bei dem die Hydrierzone gleichzeitig partiell in die Rektifizierzone der Destillationszone eingebaut ist und sich partiell außerhalb dieser Destillationszone befindet.

7. Verfahren nach Anspruch 6, derart, dass für den Teil der Hydrierreaktion innerhalb der Destillationszone die Hydrierreaktion bei einer Temperatur zwischen 100 und 200°C bei einem Druck zwischen 2 und 20 bar durchgeführt wird und die die Hydrierzone speisende Wasserstoffmenge zwischen der einfachen und zehnfachen Durchsatzmenge entsprechend der Stöchiometrie der eingesetzten Hydrierreaktionen liegt.

8. Verfahren nach einem der Ansprüche 1 bis 7, derart, dass für den Teil der Hydrierreaktion außerhalb der Destillationszone der für dieses Hydrierstufe erforderliche Druck zwischen 1 und 60 bar liegt, die Temperatur zwischen 100 und 400°C und die Raumgeschwindigkeit inmitten der Hydrierzone, berechnet bezüglich des Katalysators im allgemeinen zwischen 1 und 50 h⁻¹ (Volumen Charge pro Volumen Katalysator und Stunde) beträgt und die Hydriermenge entsprechend der Stöchiometrie der eingesetzten Hydrierreaktionen zwischen dem 0,5 und 10-Fachen dieser Stöchiometrie beträgt.

9. Verfahren nach einem der Ansprüche 6 oder 7, derart, dass der Hydrierkatalysator sich in Kontakt mit einer absteigenden flüssigen Phase und mit einer aufsteigenden Dampfphase für das gesamte katalytische Bett des Teils innerhalb der Hydrierzone befindet.

10. Verfahren nach Anspruch 9, derart, dass der gasförmige Strom, der für die Hydrierzone notwendigen Wasserstoff enthält, mit der Dampfphase im wesentlichen am Eintritt wenigstens eines katalytischen Betts der Hydrierzone vereint wird.

11. Verfahren nach einem der Ansprüche 6 oder 7, derart, dass die Strömung der zu hydrierenden Flüssigkeit im Gleichstrom zur Strömung des gasförmigen Wasserstoff umfassenden Flusses für jedes katalytische Bett des Teils innerhalb der Hydrierzone ist.

12. Verfahren nach einem der Ansprüche 6 oder 7, derart, dass die Strömung der zu hydrierenden Flüssigkeit im Gleichstrom zur Strömung des gasförmigen Wasserstoff umfassenden Stroms erfolgt und derart, dass der Destillationsdampf praktisch nicht in Kontakt mit dem Katalysator für jedes katalytische Bett des Teils innerhalb der Hydrierzone steht.

13. Verfahren nach Anspruch 12, derart, dass die Hydrierzone wenigstens eine Flüssigkeitsverteilervorrichtung in jedem katalytischen Bett dieser Zone und wenigstens eine Verteilervorrichtung für den Wasserstoff einschließenden Gasstrom umfasst, und zwar in jedem katalytischen Bett der Hydrierzone innerhalb dieser Zone.

14. Verfahren nach Anspruch 13, derart, dass die Verteilervorrichtung für den Wasserstoff umfassenden Gasstrom vor der Flüssigkeitsverteilervorrichtung angeordnet ist.

15. Verfahren nach Anspruch 13, derart, dass die Verteilervorrichtung des Wasserstoff umfassenden Gasstroms in Höhe der Flüssigkeitsverteilervorrichtung angeordnet ist.

16. Verfahren nach Anspruch 13, derart, dass die Verteilervorrichtung für den Wasserstoff umfassenden Gasstrom hinter der Flüssigkeitsverteilervorrichtung angeordnet ist.

17. Verfahren nach einem der Ansprüche 1 bis 16, derart, dass der in der Hydrierzone verwendete Katalysator wenigstens ein Metall umfasst, das aus der Nickel und Platin umfassenden Gruppe gewählt ist.

18. Verfahren nach einem der Ansprüche 1 bis 17, **dadurch gekennzeichnet, dass** der in der Hydrierzone verwendete Katalysator einen Träger umfasst.

19. Verfahren nach einem der Ansprüche 1 bis 18, derart, dass der gegebenenfalls im Überschuß vorhandene Wasserstoff, der am Kopf der Reaktionszone austritt, gewonnen, dann komprimiert und in dieser Reaktionszone wiederverwendet werden kann.

20. Verfahren nach einem der Ansprüche 1 bis 18, derart, dass der gegebenenfalls im Überschuß vorhandene Wasserstoff, der am Kopf der Reaktionszone austritt, wiedergewonnen, dann vor den Kompressionsstufen, die einer katalytischen Reformierungseinheit zugeordnet sind, injiziert wird, und zwar im Gemisch mit dem aus dieser Einheit stammenden Wasserstoff.

21. Verfahren nach Anspruch 20, derart, dass diese katalytische Reformiereinheit bei niedrigem Druck arbeitet.

22. Verfahren nach einem der Ansprüche 1 bis 21, derart, dass die Charge wenigstens ein Olefin umfasst, das höchstens sechs Kohlenstoffatome pro Molekül aufweist.
